# EUROPEAN PATENT SPECIFICATION

(11) **EP 3 562 965 B1**
(45) Date of publication and mention of the grant of the patent: **02.12.2020**
(21) Application number: 17825892.7
(22) Date of filing: 29.12.2017
(51) Int. Cl.: C22B 1/04, C22B 1/11, C22B 1/20, C22B 1/214, C22B 1/216, C22B 1/24, C22B 1/243, C22B 1/244, C21C 5/52, C22B 7/02, C22B 23/02, C22B 1/245

(54) **METHOD FOR PRODUCING NICKEL CONTAINING INDURATED CHROMITE PELLETS**
VERFAHREN ZUR HERSTELLUNG VON NICKELHALTIGEN GEHÄRTETEN CHROMITPELLETS
PROCÉDÉ DE PRODUCTION DE BILLES DE CHROMITE DURCIES CONTENANT DU NICKEL

(30) Priority: 30.12.2016 FI 20166046
(43) Date of publication of application: 06.11.2019
(73) Proprietor: Outotec (Finland) Oy, 02230 Espoo (FI)
(72) Inventor: MÄKELÄ, Pasi, 28430 Pori (FI); NÄRHI, Lauri, 02130 Espoo (FI); PALOVAARA, Petri, 28220 Pori (FI); PEKKALA, Olli, 02260 Espoo (FI); SAARENMAA, Jarmo, 28220 Pori (FI)
(74) Representative: Papula Oy
(86) International application number: PCT/FI2017/050956
(87) International publication number: WO 2018/122465

(56) References cited:
- WO-A1-2012/172168
- WO-A1-2013/071956
- AU-A- 7 732 091
- MONHEMIUS A J ED - BURKIN A R: "TREATMENT OF LATERITE ORES OF NICKEL TO PRODUCE FERRONICKEL, MATTE OR PRECIPITATED SULPHIDE", 1 January 1987 (1987-01-01), EXTRACTIVE METALLURGY OF NICK, CHICHESTER, WILEY & SONS, GB, PAGE(S) 51 - 73, XP009058773, Section 3.3.1 Caron process; figure 3.4

## Description

### Field of the invention

The invention relates to a method for producing nickel containing indurated chromite pellets as defined in the preamble of independent claim 1.

Nickel containing indurated chromite pellets can be used in processes for producing ferrochrome nickel alloy that can be used as an essential alloy in the production of metal such as stainless steel.

Publication WO 2010/092234 relates to a method for producing a ferroalloy containing nickel. From a fine-grained chromite concentrate containing iron and chromium and a fine-grained raw material containing nickel, a mixture is formed with binding agent, and the mixture is agglomerated so that objects of desired size are obtained. The obtained objects are heat treated at a temperature sufficient for removal of water of crystallization bound in the raw material. In the heat-treatment step of the objects, which is also called induration, the objects are sintered so that the objects withstand conveyance and loading into a smelter furnace. The objects formed of nickel containing material and iron containing chromite concentrate can be simultaneously calcined and desulphurized in connection and within the heat treating process also known as the sintering process. Further, the objects are smelted under reducing circumstances in order to achieve ferrochromenickel, a ferroalloy of a desired composition containing at least iron, chromium and nickel.

Document WO 2012/172168 A1 discloses a method where nickel-bearing raw material is fed into a smelting process together with ferrochrome material. The nickel-bearing raw material is not heat-treated prior to mixing it with other constituents of the agglomeration feed.

Document WO 2013/071956 A1 discloses a method of manufacturing ferrochrome with nickel salt as one raw material in the pelletizing feed.

In document AU 7732091 A is presented a process of roasting an iron-nickel sulfide concentrate prior to pelletizing to remove sulfur dioxide.

Document "Treatment of laterite ores of nickel to produce ferronickel, matte or precipitated sulphide" (Monhemius, A. J., pp. 51-73 in Extractive metallurgy of nickel, ed. Burkin, A. R., 1 January 1987, Wiley & Sons, Chichester, GB) discloses heat-treating nickel-bearing ferrous raw material by roasting it prior to pelletizing and smelting, but not treating a nickel-bearing material separately.

### Objective

The object is to provide a method for producing nickel containing indurated chromite pellets.

### Short description of the invention

The method for producing nickel containing indurated chromite pellets is characterized by the definitions of claim 1.

Preferred embodiments of the method for producing nickel containing indurated chromite pellets are defined in the dependent claims 2 to 10.

The method is based on providing nickel bearing material comprising precipitated nickel compounds from a hydrometallurgical refining process of nickel bearing raw material and heat-treating the nickel bearing precipitated material prior mixing the nickel bearing material into the ground mixture containing iron and chromium containing material, such as chromite, and optionally carbon and optionally additives. In the heat-treatment of the nickel bearing comprising precipitated nickel compounds from a hydrometallurgical refining process of nickel bearing raw material, part of the sulfur, water such as chemically bound water and free water, possible carbonates and volatiles from the nickel bearing material are removed of decomposed.

In one embodiment of the method, the nickel bearing material is heat-treated in the presence of oxygen containing gas.

In one embodiment of the method, the agglomeration mixture contains in percentages of weight (dry basis) 1 to 25 wt-% Ni, 0 to 5 wt-% C, 0 to 50 wt-% optional additives, 0.05 to 2 wt-% binding agent, and 0 to 10 wt-% fluxing agent, the balance being iron and chromium containing material and unavoidable impurities.

In one embodiment of the method, the agglomeration mixture contains in percentages of weight (dry basis) 1 to 25 wt-% Ni, 0 to 5 wt-% C, 10 to 50 wt-% Fe, 10 to 50 wt-% Cr, 0 to 50 wt-% optional additives, 0.05 to 2 wt-% binding agent, 0 to 10 wt-% fluxing agent, and the balance being unavoidable impurities or trace elements such as Na, K, Ti, V, Cl, Zn, Cu and main slag forming components in smelting stage such as Mg, Si, Ca and Al similar to these and mostly in oxide form.

In one embodiment of the method, the optional additives are iron bearing material, recyclable material such as dust from smelter(s) or steel mills, dust from heat-treatments, or the like.

In one embodiment of the method, the nickel bearing material is heat-treated by heating the nickel bearing material to a temperature between 200 and 1400 °C, preferably to a temperature between 400 and 1200 °C, more preferably to a temperature between 600 and 1200 °C, and most preferably to a temperature between 800 and 1200 °C.

In one embodiment of the method, the nickel bearing material contains in percentages of weight (as dry basis) 25 to 80 wt-% Ni, 0.001 to 40 wt-% chemically bound water, 0.001 to 50 wt-% S, and inevitable impurities such as Co, Mn, Cu and the like.

In one embodiment of the method, the nickel to iron ratio in the nickel bearing material comprising precipitated nickel compounds from a process for hydrometallurgical refining of nickel bearing material is over 1.

In one embodiment of the method, indurated chromite pellets having a diameter between 5 and 30 mm, more preferably between 6 and 20 mm, most preferably between 8 and 16 mm are formed.

In one embodiment of the method, indurated chromite pellets having a compressive strength in average over 100 kg/pellet, more preferably over 150 kg/pellet, and most preferably over 200 kg/pellet (calculated as F12mm) are formed.

In another aspect disclosed herein, a method for producing ferrochrome nickel alloy comprises the steps of forming a smelting feed and smelting the smelting feed under reducing conditions to produce slag and ferrochrome nickel alloy. The method is characterized by the smelting feed containing nickel containing indurated chromite pellets produced with a method according to the invention.

In one example of the method for producing ferrochrome nickel alloy, the smelting feed is formed so that the smelting feed in addition to the nickel containing indurated chromite pellets comprises reducing agent such as carbon bearing material or similarly behaving substances, fluxing agent such Si, Al, Ca, Mg, bearing materials, possible lumpy materials such lumpy ore, possible other iron and chromium bearing materials.

In one example of the method for producing ferrochrome nickel alloy, gases released during the smelting of the smelting feed are collected, and said gases are used in the indurating of the green pellets to produce indurated chromite pellets.

In one example of the method for producing ferrochrome nickel alloy, gases released during the smelting of the smelting feed are collected, and said gases are used in the heat-treating of the nickel-bearing material.

In one example of the method for producing ferrochrome nickel alloy, the smelting feed is smelted in an electric arc furnace, preferably in a submerged arc furnace, under reducing conditions.

In one example of the method for producing ferrochrome nickel alloy, the indurated chromite pellets are pre-heated prior smelting the indurated chromite pellets.

In other words and according to the invention, the nickel bearing material is heat-treated before mixing it in the form of heat treated nickel bearing material with the ground mixture to produce an agglomerating mixture from which green pellets are formed by agglomeration. Resulting from the heat-treatment of the nickel bearing material, nickel is at least partly present in form of nickel oxide in the heat treated nickel bearing material. The nickel bearing material that is mixed into the ground mixture to produce the agglomerating mixture comprises stoichiometric or non-stoichiometric compounds of oxygen and nickel. It is also possible to heat-treat other green pellet additives together with nickel bearing material if desired.

An advantage of the present invention is that volatiles of the nickel bearing material, especially volatile components discharging as result of thermally induced chemical reactions of nickel hydroxide or of nickel sulphide, are not released in the subsequent indurating step of the green pellets. Because the physical characteristics of the nickel bearing material changes in the heat-treatment for example when nickel oxide is formed of nickel hydroxide, the mechanical properties of indurated chromite pellets are advantageous.

Because the amount volatile components in the agglomerating mixture of the green pellets is decreased in the heat-treatment of the nickel raw material prior to mixing it into the ground mixture to produce the agglomerating mixture, the density the green pellets remain on an advantageous level. The advantageous density of the green pellets has a positive effect on the capacity of the induration apparatus such as a steel belt sintering machine or travelling grate, where the green pellets are indurated to produce indurated and sintered nickel bearing chromite pellets. The capacity of the induration apparatus is a key factor when assessing the economic and technical efficiency of the induration process. The benefit of using heat-treated nickel bearing material instead nickel bearing material containing for example nickel in the form of nickel hydroxide is that the capacity of a steel belt sintering machine increases roughly by 10 % for each 10 % of added nickel bearing material into the ground mixture (the pellet feed) as is illustrated in examples 2 and 3 in this document.

Because the nickel bearing material that is mixed into the ground mixture (the pellet feed) is heat-treated before the mixing, the compressive strength of the pellets is high, which reduces the need of adding fluxing agent into the ground mixture. If the nickel bearing material was added to the ground mixture, for example, in the form of nickel bearing material containing nickel in the form of nickel hydroxide, the need of fluxing agent would be higher so as to achieve a sufficient compressive strength. Higher amount of flux(es) (fluxing agent) in the indurated chromite pellets increases the amount of slag formed in the smelting stage, which fact again causes higher energy consumption in the smelting stage.

One more benefit of the heat-treatment of the nickel bearing material prior mixing it to the ground mixture is that the hot loading temperature will not remarkably drop. The hot loading temperature values give information about the refractoriness under load and the behavior of the indurated chromite pellets in the upper layer of the bed in the smelting furnace.

If the nickel bearing material was in the form of nickel bearing material containing nickel in the form of nickel hydroxide, the hot loading temperature would greatly drop when more than 10 % nickel bearing material would is added.

When using heat-treated nickel bearing material in the conventional chromite pellet process that is based on steel belt sintering, energy is saved in the drying-stage of the chromite pellet sintering (also may called as induration) process. When nickel bearing material is for example added to the ground mixture in the form of material containing nickel hydroxide, the delay time in the drying-stage of the green pellets in the steel belt sintering machine nearly doubles, because the evaporating water from the green pellets is increased up to 50 %.

The heat-treatment of the nickel bearing material comprising precipitated nickel compounds from a process for hydrometallurgical refining of nickel bearing material, such as lateritic or sulfidic based materials, prior mixing it into the agglomeration mixture, also prevents corrosion of the apparatus, such as a steel belt sintering machine or travelling grate, where the pellets are processed. The nickel bearing material from a hydrometallurgical treatment, when used as such without heat-treatment, releases corrosive gases such as sulfur oxides resulting in the induration process of the green pellets.

Surprisingly it was noticed that the indurated nickel bearing chromite pellets produced in accordance with the process of the present invention also have good reducing characteristics in the subsequent smelting process. Further, the high-temperature strength of the indurate pellets of this invention is on a good level.

Increasing of the temperature in the heat-treatment of the nickel bearing raw material used in this invention decreases the moisture content of the green pellets in the following agglomeration step and makes it possible to achieve other good quality characteristics of the indurated chromite pellets such as heat strength and compressive strength. Consequently, the residence time of the pellets in a possible drying stage of the induration machine is shorter.

Heat-treating of the nickel bearing material comprising precipitated nickel compounds from a process for hydrometallurgical refining of nickel bearing material such as lateritic or sulfidic based materials prior mixing into the ground mixture allows adjusting of the physical properties of the nickel bearing material, whereby the moisture content of the green pellets and the porosity of the indurated chromite pellets is low concluding higher capacity of the indurating vessel for green pellets.

### Detailed description of the invention

Next, the method for producing nickel containing indurated chromite pellets and some preferred embodiments and variants of the method for producing nickel containing indurated chromite pellets will be described in greater detail.

The method comprises providing a ground mixture that can also be called "pellet feed", containing iron and chromium containing material and optionally carbon and optionally additives.

The method optionally comprises a step of filtrating the ground mixture so that the ground mixture has a specific particle size distribution.

The method comprises providing nickel bearing material, binding agent, and optionally fluxing agent.

The method comprises mixing nickel bearing material, binding agent, liquid such as water, and optionally fluxing agent into the ground mixture (the pellet feed) to produce an agglomerating mixture.

The method comprises agglomerating the agglomerating mixture to produce green pellets.

The method comprises indurating the green pellets to produce indurated chromite pellets.

The nickel bearing material that is provided in the method comprising precipitated nickel compounds from a process for hydrometallurgical refining of nickel bearing material.

The method comprises heat-treating the nickel bearing material prior mixing the nickel bearing material into the ground mixture for removing sulfur, water such as chemically bound water or free water, possible carbonates and other volatiles from the nickel bearing material, and to produce nickel oxide in the nickel bearing material, wherein the nickel bearing material that is mixed into the ground mixture to form the agglomerating mixture is in the form of nickel bearing material containing nickel in the form of nickel oxide.

The heat-treating of the nickel bearing material can be performed in the presence of oxygen containing gas. The oxygen containing gas originates preferably, but not necessarily, from a smelting stage where gas is collected and can be used as burning energy in the heat-treating of the nickel bearing material. The heat-treating of the nickel bearing material can be performed as direct or indirect heating.

The agglomerating mixture contains following components preferably, but not necessarily, in percentages of weight and mostly as an oxide form (on dry basis):
Ni: 1 to 25 wt-%,
C: 0 to 5 wt-%,
optional additives: 0 to 50 wt-%,
binding agent: 0.05 to 2 wt-%, and
fluxing agent: 0 to 10 wt-%,
the balance being iron and chromium containing material and unavoidable impurities.

The agglomerating mixture contains following components preferably, but not necessarily, in percentages of weight and mostly as an oxide form (on dry basis):
Ni: 1 to 25 wt-%,
C: 0 to 5 wt-%,
Fe: 10 to 50 wt-%,
Cr: 10 to 50 wt-%,
optional additives: 0 to 50 wt-%,
binding agent: 0.05 to 2 wt-%,
fluxing agent: 0 to 10 wt-%, and
unavoidable impurities.
the balance being unavoidable impurities such as Na, K, Ti, V, Cl, Zn, Cu and main slag forming components in smelting stage such as Mg, Si, Ca and Al similar to these and mostly in oxide form. These components can be 25 to 70 wt-%.

Indurating of the green pellets is preferably, but not necessarily, done in an induration furnace that is in the form of a steel belt sintering machine, or in a shaft kiln or in a rotary kiln or in a furnace comprising a traveling grate or similar convenient way. The indurating is preferably done, but not necessarily, under oxidizing atmosphere or conditions.

The binding agent contains preferably, but not necessarily, bentonite or similarly behaving material such as organic binders.

The Ni_{eqv} of the agglomerating mixture (on dry basis) in preferably, but not necessarily, between 1 and 25 %, such as between 5 and 25 %.

The unavoidable impurities can for example be at least one of S, Na, Cl, V, Ti, K, Zn, Co, Cu, Mo and Mn and others as trace elements.

The optional additives can be iron bearing material, chromium bearing material, recyclable material such as dust from smelter(s) or steel mills, dust from heat-treatment or the like.

The fluxing agent can contain Ca, Si, Mg and/or Al bearing materials.

The nickel bearing material comprising precipitated nickel compounds from a process for hydrometallurgical refining of nickel bearing material can be heat-treated by heating the nickel bearing material to a temperature between 200 and 1400 °C, preferably to a temperature between 400 and 1200 °C, more preferably to a temperature between 600 and 1200 °C, and most preferably to a temperature between 800 and 1200 °C.

Heating of the nickel bearing material comprising precipitated nickel compounds from a process for hydrometallurgical refining of nickel bearing material to a temperature between 200 and 400°C can result in that 1 to 30 % of the total weight of the nickel bearing material is evaporated and lost.

Heating of the nickel bearing material comprising precipitated nickel compounds from a process for hydrometallurgical refining of nickel bearing material to a temperature between 400 and 800°C can result in that 3 to 40 % of the total weight of the nickel bearing material is evaporated and lost.

Heating of the nickel bearing material comprising precipitated nickel compounds from a process for hydrometallurgical refining of nickel bearing material to a temperature between 800 and 1200°C can result in that 5 to 50 % of the total weight of the nickel bearing material is evaporated and lost.

The nickel bearing material comprising precipitated nickel compounds from a process for hydrometallurgical refining of nickel bearing material can contain in percentages of weight (in dry basis):
Ni: 25 to 80 wt-%
Chemically bound water: 0.001 to 40 wt-%, and
S: 0.001 to 50 wt-%.

The nickel bearing material comprising precipitated nickel compounds from a process for hydrometallurgical refining of nickel bearing material can contain in percentages of weight (as dry basis):
Ni: 25 to 80 wt-%,
Chemically bound water: 5 to 40 wt-%,
S: 0.001 to 10 wt-%, and
inevitable impurities such as Co, Mn, Cu and the like.

The nickel bearing material comprising precipitated nickel compounds from a process for hydrometallurgical refining of nickel bearing material can contain in percentages of weight (as dry basis):
Ni: 25 to 80 wt-%,
Chemically bound water: 5 to 40 wt-%, and
S: 0.001 to 10 wt-%,
the balance being inevitable impurities such as Co, Mn, Cu and the like.

The nickel bearing material comprising precipitated nickel compounds from a process for hydrometallurgical refining of nickel bearing material can contain in percentages of weight (as dry basis):
Ni: 25 to 80 wt-%,
Chemically bound water: 0.001 to 10 wt-%,
S: 5 to 50 wt-%, and
inevitable impurities such as Co, Mn, Cu and the like.

The nickel bearing material comprising precipitated nickel compounds from a process for hydrometallurgical refining of nickel bearing material can contain in percentages of weight (as dry basis):
Ni: 25 to 80 wt-%,
Chemically bound water: 0.001 to 10 wt-%, and
S: 5 to 50 wt-%,
the balance being inevitable impurities such as Co, Mn, Cu and the like.

The nickel to iron ratio in the nickel bearing material comprising precipitated nickel compounds from a process for hydrometallurgical refining of nickel bearing material can be over 1.

In the method, roasting of the nickel bearing material comprising precipitated nickel compounds from a process for hydrometallurgical refining of nickel bearing material can be carried out during the heat-treating of the nickel bearing material.

In the method, calcination of the nickel bearing material comprising precipitated nickel compounds from a process for hydrometallurgical refining of nickel bearing material can be carried out during the heat-treating of the nickel bearing material.

The nickel bearing material that is provided and that comprises precipitated nickel compounds from a process for hydrometallurgical refining of nickel bearing material can additionally contain at least one of sulfur, such as sulphides, sulphates, or similar to these, carbon such as carbonate and carbides, and oxides such as nickel oxides.

The nickel bearing material comprising precipitated nickel compounds from a process for hydrometallurgical refining of nickel bearing material can comprise at least one of nickel hydroxide, nickel oxide, nickel sulphide, nickel sulphate, and nickel carbonate or the like or combination of these.

The method can comprise agglomerating the green pellets from the agglomerating mixture in a pelletizing drum or disc.

In the method, indurated chromite pellets having a diameter between 5 and 30 mm, more preferably between 6 and 20 mm, most preferably between 8 and 16 mm, is preferably, but not necessarily, produced.

In the method, indurated chromite pellets having compressive a strength (calculated as F₁₂ₘₘ) in average over 100 kg/pellet, more preferably over 150 kg/pellet, and most preferably over 200 kg/pellet, is preferably, but not necessarily, produced.

A method for producing ferrochrome nickel alloy is also disclosed herein.

The method for producing ferrochrome nickel alloy comprises producing nickel containing indurated chromite pellets with a method according to any embodiment as described herein, forming a smelting feed containing the nickel containing indurated chromite pellets, and additionally smelting the smelting feed under reducing conditions and preferably by carbon bearing material to produce slag and ferrochrome nickel alloy. The smelting and reduction of the smelting feed is preferably done in a closed furnace so that the formed gases can be collected. The collected gases can be utilized, but not necessary, in heat treatment of nickel bearing material and in other convenient ways.

The smelting feed can be formed so that the smelting feed in addition to the nickel containing indurated chromite pellets comprises reducing agent such as carbon bearing material or similarly behaving substances, fluxing agent such Si, Al, Ca, Mg, bearing materials, possible lumpy materials such lumpy ore, possible other iron and chromium bearing materials.

The method for producing ferrochrome nickel alloy can comprise collecting gases released during the smelting of the smelting feed, and using said gases as oxygen containing gas in the indurating of the green pellets to produce indurated chromite pellets.

The method for producing ferrochrome nickel alloy can comprise collecting gases released during the smelting of the smelting feed, and using said gases as oxygen containing gas in the heat-treating of the nickel bearing material.

The method for producing ferrochrome nickel alloy can comprise smelting the smelting feed in a submerged arc furnace.

The method for producing ferrochrome nickel alloy can additionally comprise prereduction of nickel containing indurated chromite pellets or of the smelting feed to produce partly metallizated nickel containing indurated chromite pellets. The prereduction can be done in reducing atmosphere with or without the presence of carbon. The prereduction vessel is preferably rotary kiln or similar convenient equipment. The prereduction temperature is preferably between 800 and 1600 °C, more preferably between 1000 and 1250 °C. The retention time is to several minutes to several hours.

The method for producing ferrochrome nickel alloy can additionally comprises the preheating of nickel containing indurated chromite pellets or of the smelting feed prior the smelting stage, advantageously by using the energy containing gas collected in the smelting or residual heat from the prereduction stage.

The smelting feed comprises normally chromium, iron and nickel bearing indurated chromite pellets, flux(es), reducing agent(s), possible other agglomerates or possible lumpy materials or possible fine materials.

The fluxing materials can be for example Si, Ca, Al, Mg, bearing oxides or similar to these. Fluxing materials are typically 10 to 50 wt-% of the total smelting feed. The fluxing amount out of this range is also possible if smelting feed contains already some of the smelting fluxing materials. Otherwise, fluxing amount out of preferable range may cause practical problems such as too viscous slag or higher energy consumption.

The reducing agent can be carbon containing material such coke, anthracite, coal, char coal or similar to these or combination of these. The reducing carbon content is preferably over 60 wt-%, more preferably over 80 wt-% (as dry basis). The amount of reductant is adjusted so that the desired element yields are achieved

The smelting can be conducted preferably at 1500 to 1900 °C and more preferably at 1550 to 1750 °C.

The produced ferrochrome alloy can contain in percentages of weight:
Ni: 1 to 30 wt-%,
Si: 0.1 to 5 wt-%, and
C 1 to 8 wt-%,
the balance being iron and chromium and inevitable impurities such as S, V, Ti, Mn, Cu, Co, Mo or the like

The chromium to nickel ratio in the produced ferrochrome alloy can be between 0.9 and 8.0.

The invention relates also to an indurated chromite pellet for a smelting feed for production of ferrochromenickel alloy.

The indurated chromite pellet containing in percentages of weight between 1 to 25 wt-% nickel as oxides.

The nickel oxide in the indurated chromite pellet is preferably, but not necessarily, heat-treated precipitated nickel compounds from a process for hydrometallurgical refining of nickel bearing material such as heat-treated nickel hydroxide.

The heat-treated precipitated nickel compounds from a process for hydrometallurgical refining of nickel bearing material such as has preferably, but not necessarily, been added to an agglomeration feed prior indurating of a green pellet formed from the agglomeration feed to produce the indurated chromite pellet.

The indurated chromite pellet has preferably, but not necessarily, a diameter between 5 and 30 mm, more preferably between 6 and 20 mm, most preferably between 8 and 16 mm.

The indurated chromite pellet can have a porosity in average between 15 and 40 %, more preferably between 20 and 35 %, and most preferably between 20 and 32 %.

The indurated chromite pellet has preferably, but not necessarily, a compressive strength in average over 100 kg/pellet, more preferably over 150 kg/pellet, and most preferably over 200 kg/pellet (calculated as F₁₂ₘₘ).

The nickel as oxide is preferably, but not necessarily, present both within the chromite grains and on the outside of the chromite grains in the microstructure of the indurated chromite pellet. This promotes reduction of the pellet, because the nickel to be reduced is close to the chromite-iron-oxide (promotes kinetics, because the liquid-solid-reactions are faster than the gas-solid-reactions and by nickel addition the formation of liquids starts earlier than in conventional iron and chromium reduction). Additionally, in an electric furnace, which function is based on resistive heating, it is of advantage that the metallized part is within the indurated chromite pellet in the reducing conditions. Here the indurated chromite pellet will function as an isolator. In such case, the electrical characteristics (resistance and power factor) of the smelting feed that comprises the indurated chromite pellets are better compared to a situation where chromite and nickel bearing material are fed separately.

The indurated chromite pellet can be free of additional fluxing agent such Ca, Si, Mg and/or Al bearing materials or the like, with the exception for possible trace and/or impurity levels, required in a smelting stage for smelting a smelting feed containing a plurality of such indurate pellets to produce ferrochrome nickel alloy.

Alternatively, the indurated chromite pellet can comprise at least a part of the fluxing agent (s) such Ca, Si, Mg and/or Al bearing materials or the like required in a smelting stage for smelting a smelting feed containing a plurality of such indurate pellets to produce ferrochrome nickel alloy.

### Examples

In the following the method will be described thorough examples.

In each example the same amount and bentonite was used in the agglomeration mixture.

In each example the agglomerating to produce green pellets of the agglomerating mixture and the indurating of the green pellets was performed in the same way.

In each example the indurating temperature of the green pellets was 1450 °C.

Examples 1 to 3 are examples of the prior art and example 4 is performed as in the invention.

### Example 1

- Content of the agglomeration feed (in percentages of weight)
   ∘ 10 % nickel hydroxide (containing sulfur and chemically bound water (∼35%)),
      ▪ with nickel content of 36 weight % and sulphur content below 5 weight %.
   ∘ 90 % Iron and chromium bearing material (chromite)
   ∘ 3% of calcite
- Moisture of the green pellets was 8.0%
- Compressive strength of the indurated chromite pellets was 194 kg/pellet (calculated as F₁₂ₘₘ)
- Relative density of the individual indurated chromite pellets was 90 %. This has direct impact on the capacity of the machine, where the induration of the green pellets is performed
- Total porosity of the indurated chromite pellets was 32.4 %
- Hot loading temperature of the indurated chromite pellets where 5% compression occurs was 1334 °C

The composition of indurated chromite pellets was as components (in percentages of weight)
- Fe oxides calculated as Fe₂O₃ 26.8 wt-%
- Cr₂O₃ 36.8 wt-%
- NiO 4.8 wt-%
Chromium (Cr) to Nickel (Ni) ratio was 6.7 and Chromium (Cr) to Iron (Fe) ratio was 1.3

### Example 2

- Content of the agglomeration feed (in percentages of weight)
   ∘ 20 % nickel hydroxide (containing sulfur and chemically bound water (∼35 wt-%)),
      ▪ with nickel content of 36 weight % and sulphur content below 5 weight %.
   ∘ 80 w-t% Iron and chromium bearing material (chromite)
   ∘ 3 wt-% of wollastonite + 2 wt-% of calcite

- Moisture of the green pellets was 10.0 %
- Compressive strength of the indurated chromite pellets was 200 kg/pellet (calculated as F₁₂ₘₘ)
- Relative density of individual indurated chromite pellets was 84 %. This has direct impact on the capacity of the machine, where the induration of the green pellets is performed
- Total porosity of the indurated chromite pellets was 38.2 %
- Hot loading temperature of the indurated chromite pellets where 5% compression occurs was 1259 °C

The composition of indurated chromite pellets as components (in percentages of weight):
- Fe oxides calculated as Fe₂O₃: 24.1 wt-%
- Cr₂O₃: 33.0 wt-%
- NiO 9.4 wt-%
Chromium (Cr) to Nickel (Ni) ratio was 3.1 and Chromium (Cr) to Iron (Fe) ratio was 1.3

### Example 3

- Content of the agglomeration feed (in percentages of weight)
   ∘ 20 % nickel hydroxide (containing sulfur and chemically bound water (∼35%)),
      ▪ with nickel content of 36 wt-% and sulphur content below 5 wt-%.
   ∘ 80 wt-% Iron and chromium bearing material (chromite)
   ∘ No fluxing were used
- Moisture of the green pellets was 14.8 wt-%
- Compressive strength of indurated chromite pellets 142 kg/pellet (calculated as F₁₂ₘₘ)
- Relative density of the individual indurated chromite pellets 86 % (direct impact on the capacity of induration machine)
- Total porosity of the indurated chromite pellets 37.4 % .This has direct impact on the capacity of the machine, where the induration of the green pellets is performed
- Hot loading temperature of the indurated chromite pellets where 5% compression occurs was 1233 °C

The composition of indurated chromite pellets as components
- Fe oxides calculated as Fe₂O₃ : 25.5 wt-%
- Cr₂O₃ : 35.2 wt-%
- NiO: 9.9 wt-%
Chromium (Cr) to Nickel (Ni) ratio was 3.1 and Chromium (Cr) to Iron (Fe) ratio was 1.4.

### Example 4

- Content of the agglomeration feed (in percentages of weight):
   ∘ 9.3 wt-% Heat-treated nickel hydroxide (major amount of sulfur and volatiles has been removed)
   ∘ 90.7 wt-% Chromite concentrate
   ∘ No fluxes and no other additives
- Moisture of the Green pellets was 6.8 %
- Compressive strength of indurated chromite pellets was 293 kg/pellet (calculated as F₁₂ₘₘ)
- Relative density of individual indurated chromite pellets was 106 %
- Total porosity of the indurated chromite pellets was 22.4 %
- Hot loading temperature of the indurated chromite pellets where 5% compression occurs was 1387 °C

The composition of indurated chromite pellets as components
- Fe oxides calculated as Fe₂O₃ : 25.8 wt-%
- Cr₂O₃ : 38.3 wt-%
- NiO : 5.4 wt-%

Chromium (Cr) to Nickel (Ni) ratio was 6.2 and Chromium (Cr) to Iron (Fe) ratio was 1.4.

It is apparent to a person skilled in the art that as technology advanced, the basic idea of the invention can be implemented in various ways. The invention and its embodiments are therefore not restricted to the above examples, but they may vary within the scope of the claims.

## Claims

1. A method for producing nickel containing indurated chromite pellets, wherein the method comprising
providing a ground mixture containing iron and chromium containing material and optionally carbon and optionally additives,
providing nickel bearing material comprising precipitated nickel compounds from a process for hydrometallurgical refining of nickel bearing raw material, binding agent, and optionally fluxing agent,
mixing nickel bearing material, binding agent and optionally fluxing agent into the ground mixture to produce an agglomerating mixture,
agglomerating the agglomerating mixture to produce green pellets, and
indurating the green pellets to produce indurated chromite pellets,
**characterized**
**by** heat-treating the nickel bearing material prior mixing the nickel bearing material into the ground mixture to remove sulfur, water, possible carbonates and volatiles from the nickel bearing material and to produce nickel oxides in the nickel bearing material.

2. The method according to claim 1, **characterized**
**by** heat-treating the nickel bearing material in the presence of oxygen containing gas.

3. The method according to claim 1 or 2, **characterized**
**by** the agglomerating mixture containing in percentages of weight (dry basis)
Ni: 1 to 25 wt-%,
C: 0 to 5 wt-%,
optional additives: 0 to 50 wt-%,
binding agent: 0.05 to 2 wt-%, and
fluxing agent: 0 to 10 wt-%,
the balance being iron and chromium containing material and unavoidable impurities.

4. The method according to claim 1 or 2, **characterized**
**by** the agglomerating mixture containing in percentages of weight (dry basis)
Ni: 1 to 25 wt-%,
C: 0 to 5 wt-%,
Fe: 10 to 50 wt-%,
Cr: 10 to 50 wt-%,
optional additives: 0 to 50 wt-%,
binding agent: 0.05 to 2 wt-%,
fluxing agent: 0 to 10 wt-%, and
the balance being unavoidable impurities or trace elements such as Na, K, Ti, V, Cl, Zn, Cu and main slag forming components in smelting stage such as Mg, Si, Ca and Al similar to these and mostly in oxide form.

5. The method according to any of the claims 1 to 4, **characterized**
**by** the optional additives being iron bearing material, chromium bearing material, recyclable material such as dust from smelter(s) or steel mills, dust from heat-treatments or the like.

6. The method according to any of the claims 1 to 5, **characterized**
**by** heat-treating the nickel bearing material by heating the nickel bearing material to a temperature between 200 and 1400 °C, preferably to a temperature between 400 and 1200 °C, more preferably to a temperature between 600 and 1200 °C, and most preferably to a temperature between 800 and 1200 °C.

7. The method according to any of the claims 1 to 6, **characterized**
**by** the nickel bearing material containing in percentages of weight (as dry basis):
Ni: 25 to 80 wt-%,
Chemically bound water: 0.001 to 40 wt-%,
S: 0.001 to 50 wt-%, and
inevitable impurities such as Co, Mn, Cu and the like.

8. The method according to any of the claims 1 to 7, **characterized**
**by** the nickel to iron ratio in the nickel bearing material comprising precipitated nickel compounds from a process for hydrometallurgical refining of nickel bearing material being over 1.

9. The method according to any of the claims 1 to 8, **characterized**
**by** forming indurated chromite pellets having a diameter between 5 and 30 mm, more preferably between 6 and 20 mm, most preferably between 8 and 16 mm.

10. The method according to any of the claims 1 to 9, **characterized**
**by** forming indurated chromite pellets having a compressive strength in average over 100 kg/pellet, more preferably over 150 kg/pellet, and most preferably over 200 kg/pellet (calculated as F₁₂ₘₘ).

## Patentansprüche

1. Verfahren zur Herstellung von nickelhaltigen gehärteten Chromitpellets, wobei das Verfahren umfasst:
Bereitstellen einer Grundmischung, die eisen- und chromhaltiges Material und optional Kohlenstoff und optional Additive enthält,
Bereitstellen von Nickellagermaterial, umfassend gefällte Nickelverbindungen von einem Prozess zum hydrometallurgischen Raffinieren von Nickellagerrohmaterial, Bindemittel und optional Flussmittel,
Mischen von Nickellagermaterial, Bindemittel und optional Flussmittel in die Grundmischung zur Herstellung einer agglomerierenden Mischung,
Agglomerieren der agglomerierenden Mischung zur Herstellung von Grünpellets, und
Härten der Grünpellets zum Herstellen von gehärteten Chromitpellets,
**gekennzeichnet durch**
ein Wärmebehandeln des Nickellagermaterials vor dem Mischen des Nickellagermaterials in die Grundmischung zum Entfernen von Schwefel, Wasser, möglichen Karbonaten und flüchtigen Bestandteilen von dem Nickellagermaterial und zum Herstellen von Nickeloxiden in dem Nickellagermaterial.

2. Verfahren nach Anspruch 1, **gekennzeichnet durch** ein Wärmebehandeln des Nickellagermaterials in Anwesenheit von sauerstoffhaltigem Gas.

3. Verfahren nach Anspruch 1 oder 2, **dadurch gekennzeichnet, dass** die agglomerierende Mischung in Gewichtsprozenten (Trockenbasis) Folgendes enthält:
Ni: 1 bis 25 Gewichts-%,
C: 0 bis 5 Gewichts-%,
optionale Additive: 0 bis 50 Gewichts-%,
Bindemittel: 0.05 bis 2 Gewichts-%, und
Flussmittel: 0 bis 10 Gewichts-%,
wobei der Rest eisen- und chromhaltiges Material und unvermeidbare Verunreinigungen ist.

4. Verfahren nach Anspruch 1 oder 2, **dadurch gekennzeichnet, dass** die agglomerierende Mischung in Gewichtsprozenten (Trockenbasis) Folgendes enthält:
Ni: 1 bis 25 Gewichts-%,
C: 0 bis 5 Gewichts-%,
Fe: 10 bis 50 Gewichts-%,
Cr: 10 bis 50 Gewichts-%,
optionale Additive: 0 bis 50 Gewichts-%,
Bindemittel: 0.05 bis 2 Gewichts-%, und
Flussmittel: 0 bis 10 Gewichts-%, und
wobei der Rest unvermeidbare Verunreinigungen oder Spurenelemente wie zum Beispiel Na, K, Ti, V, Cl, Zn, Cu sind, und hauptschlackebildende Komponenten in der Schmelzstufe wie zum Beispiel Mg, Si, Ca und Al ähnlich zu diesen und meist in Oxidform.

5. Verfahren nach einem der Ansprüche 1 bis 4, **dadurch gekennzeichnet, dass** die optionalen Additive Eisenlagermaterial, Chromlagermaterial, recyclebares Material wie zum Beispiel Staub von Schmelzen oder Stahlmühlen, Staub von Wärmebehandlungen oder dergleichen sind.

6. Verfahren nach einem der Ansprüche 1 bis 5, **gekennzeichnet durch** eine Wärmebehandlung des Nickellagermaterials durch Heizen des Nickellagermaterials auf eine Temperatur zwischen 200 und 1400°C, vorzugsweise auf eine Temperatur zwischen 400 und 1200°C, weiter bevorzugt auf eine Temperatur zwischen 600 und 1200°C, und am meisten bevorzugt auf eine Temperatur zwischen 800 und 1200°C.

7. Verfahren nach einem der Ansprüche 1 bis 6, **dadurch gekennzeichnet, dass** das Nickellagermaterial in Gewichtsprozenten (als Trockenbasis) Folgendes enthält:
Ni: 25 bis 80 Gewichts-%,
chemisch gebundenes Wasser: 0.001 bis 40 Gewichts-%,
S: 0.001 bis 50 Gewichts-%, und
unvermeidbare Verunreinigungen wie zum Beispiel Co, Mn, Cu und dergleichen.

8. Verfahren nach einem der Ansprüche 1 bis 7, **dadurch gekennzeichnet, dass** das Verhältnis von Nickel zu Eisen in dem Nickellagermaterial, das gefällte Nickelverbindungen von einem Prozess zum hydrometallurgischen Raffinieren von Nickellagermaterial umfasst, über 1 ist.

9. Verfahren nach einem der Ansprüche 1 bis 8, **gekennzeichnet durch** ein Bilden von gehärteten Chromitpellets mit einem Durchmesser zwischen 5 und 30 mm, bevorzugt zwischen 6 und 20 mm, am meisten bevorzugt zwischen 8 und 16 mm.

10. Verfahren nach einem der Ansprüche 1 bis 9, **gekennzeichnet durch** ein Bilden von gehärteten Chromitpellets mit einer mittleren Druckfestigkeit über 100 kg/Pellet, bevorzugter über 150 kg/Pellet, und am meisten bevorzugt über 200 kg/Pellet (berechnet als F₁₂ₘₘ).

## Revendications

1. Procédé de production de boulettes de chromite durcies contenant du nickel, dans lequel le procédé comprenant le fait
de fournir un mélange broyé contenant un matériau contenant du fer et du chrome et éventuellement du carbone et éventuellement des additifs,
de fournir un matériau nickélifère comprenant des composés de nickel précipités provenant d'un procédé de raffinage hydrométallurgique de matière première nickélifère, un agent de liaison et éventuellement un agent de fluxage,
de mélanger un matériau nickélifère, un agent de liaison et éventuellement un agent de fluxage dans le mélange broyé pour produire un mélange agglomérant,
d'agglomérer le mélange agglomérant pour produire des boulettes crues, et
de durcir les boulettes crues pour produire des boulettes de chromite durcies,
**caractérisé**
**par** le fait de traiter thermiquement le matériau nickélifère avant de mélanger le matériau nickélifère dans le mélange broyé pour éliminer le soufre, l'eau, les carbonates éventuels et les substances volatiles du matériau nickélifère et pour produire des oxydes de nickel dans le matériau nickélifère.

2. Procédé selon la revendication 1, **caractérisé**
**par** le fait de traiter thermiquement le matériau nickélifère en présence de gaz contenant de l'oxygène.

3. Procédé selon la revendication 1 ou 2, **caractérisé**
**en ce que** le mélange agglomérant contient en pourcentages en poids (base sèche)
Ni : 1 à 25% en poids,
C : 0 à 5% en poids,
des additifs facultatifs : 0 à 50% en poids,
un agent de liaison : 0,05 à 2% en poids, et
un agent de fluxage: 0 à 10% en poids,
le reste étant un matériau contenant du fer et du chrome et des impuretés inévitables.

4. Procédé selon la revendication 1 ou 2, **caractérisé**
**en ce que** le mélange agglomérant contient en pourcentages en poids (base sèche)
Ni : 1 à 25% en poids,
C : 0 à 5% en poids,
Fe : 10 à 50% en poids,
Cr : 10 à 50% en poids,
des additifs facultatifs : 0 à 50% en poids,
un agent de liaison : 0,05 à 2% en poids,
un agent de fluxage : 0 à 10% en poids, et
le reste étant des impuretés inévitables ou des éléments traces tels que Na, K, Ti, V, Cl, Zn, Cu et des composants principaux de formation de laitier en phase de fusion tels que Mg, Si, Ca et Al similaires à ceux-ci et principalement sous forme d'oxyde.

5. Procédé selon l'une des revendications 1 à 4, **caractérisé**
**en ce que** les additifs facultatifs sont un matériau ferrifère, un matériau chromifère, un matériau recyclable tel que la poussière provenant de four(s) de fusion ou d'aciérie, la poussière provenant de traitements thermiques ou autre analogue.

6. Procédé selon l'une des revendications 1 à 5, **caractérisé**
**par** le fait de traiter thermiquement le matériau nickélifère en chauffant le matériau nickélifère à une température comprise entre 200 et 1400°C, de préférence à une température comprise entre 400 et 1200°C, plus préférablement à une température comprise entre 600 et 1200°C, et idéalement à une température comprise entre 800 et 1200°C.

7. Procédé selon l'une des revendications 1 à 6, **caractérisé**
**en ce que** le matériau nickélifère contient en pourcentages en poids (sous forme de base sèche) :
Ni : 25 à 80% en poids,
de l'eau liée chimiquement : 0,001 à 40% en poids,
S : 0,001 à 50% en poids, et
des impuretés inévitables telles que Co, Mn, Cu et autre analogue.

8. Procédé selon l'une des revendications 1 à 7, **caractérisé**
**en ce que** le rapport nickel sur fer dans le matériau nickélifère comprenant des composés de nickel précipités provenant d'un procédé de raffinage hydrométallurgique du matériau nickélifère est supérieur à 1.

9. Procédé selon l'une des revendications 1 à 8, **caractérisé**
**par** la fait de former des boulettes de chromite durcies ayant un diamètre compris entre 5 et 30 mm, plus préférablement entre 6 et 20 mm, idéalement entre 8 et 16 mm.

10. Procédé selon l'une des revendications 1 à 9, **caractérisé**
**par** le fait de former des boulettes de chromite durcies ayant une résistance à la compression en moyenne supérieure à 100 kg/boulette, plus préférablement supérieure à 150 kg/boulette, et idéalement supérieure à 200 kg/boulette (calculée en tant que F₁₂ₘₘ).
